# EUROPÄISCHE PATENTSCHRIFT

(11) **EP 3 814 656 B1**
(45) Veröffentlichungstag und Bekanntmachung des Hinweises auf die Patenterteilung: **30.08.2023**
(21) Anmeldenummer: 19728413.6
(22) Anmeldetag: 03.06.2019
(51) Int. Cl.: F16H 57/021, B60G 21/055, F16C 35/067, F16C 19/18, F16C 35/06

(54) **AKTUATOREINRICHTUNG FÜR EINEN VERSTELLBAREN WANKSTABILISATOR EINES KRAFTFAHRZEUGS**
ACTUATOR DEVICE FOR AN ADJUSTABLE ROLL STABILIZER OF A MOTOR VEHICLE
DISPOSITIF D'ACTIONNEMENT D'UN STABILISATEUR DE ROULIS RÉGLABLE D'UN VÉHICULE AUTOMOBILE

(30) Priorität: 28.06.2018 DE 102018210637
(43) Veröffentlichungstag der Anmeldung: 05.05.2021
(73) Patentinhaber: ZF Friedrichshafen AG, 88046 Friedrichshafen (DE)
(72) Erfinder: GRAEULER, Dirk, 49191 Belm (DE); RISSLING-STAUPENDAHL, Robert, 49179 Ostercappeln (DE)
(74) Vertreter: ZF Friedrichshafen AG
(86) Internationale Anmeldenummer: PCT/EP2019/064288
(87) Internationale Veröffentlichungsnummer: WO 2020/001921

(56) Entgegenhaltungen:
- DE-A1-102013 002 704
- DE-A1-102014 203 242
- DE-A1-102014 205 261
- DE-A1-102015 220 176
- DE-A1-102016 200 177
- DE-A1-102016 219 399

## Beschreibung

Die Erfindung betrifft eine Aktuatoreinrichtung für einen verstellbaren Wankstabilisator eines Kraftfahrzeugs gemäß dem Oberbegriff des Anspruchs 1.

In der Kraftfahrzeugtechnik, insbesondere der Fahrwerkstechnik ist es für sich gesehen bekannt, Kraftfahrzeuge mit einem sogenannten Wankstabilisator auszustatten. In einfachster Ausführung handelt es sich hierbei um eine im Wesentlichen C-förmige Drehstabfeder, die im mittigen Bereich drehbar gegenüber dem Fahrzeugaufbau gelagert ist und deren äußere, sich gegenüberliegende Enden jeweils mit einer Radaufhängung gekoppelt sind. Durch diese Konstruktion sorgt der Wankstabilisator dafür, dass die Karosserie des Fahrzeugs bei einer Kurvenfahrt nicht nur an der kurvenäußeren Seite einfedert (bedingt durch die Zentrifugalkraft), sondern dass zudem das kurveninnere Rad etwas abgesenkt wird (Kopierverhalten).

Zur weiteren Steigerung der Fahrzeugstabilität sowie des Fahrkomforts ist es bekannt, derartige Wankstabilisatoren verstellbar auszuführen. Der Wankstabilisator umfasst in diesem Fall eine Aktuatoreinrichtung und ist in zwei mit Hilfe der Aktuatoreinrichtung um eine Rotationsachse relativ zueinander verdrehbare Stabilisatorabschnitte geteilt. Durch Verdrehung der Stabilisatorabschnitte zueinander wird eine Wankbewegung des Fahrzeugaufbaus gezielt erzeugt oder einer durch äußere Einflüsse hervorgerufenen Wankbewegung des Fahrzeugaufbaus gezielt entgegengewirkt. Es sind verstellbare Wankstabilisatoren bekannt, deren Aktuatoreinrichtung einen Aktuator in Form eines Elektromotors, aufweist. Zur Erzielung geeigneter Drehzahlen bzw. Drehmomente steht dieser oftmals in Antriebsverbindung mit einem mechanischen Getriebe, insbesondere in Bauform eines vorzugsweise mehrstufigen Planetengetriebes. In diesem Zusammenhang sei beispielhaft auf DE 10 2016 219 399 A1 verwiesen.

Bei der dort gezeigten Aktuatoreinrichtung weist das Gehäuse eine im Wesentlichen rotationssymmetrische Grundform auf. Ein als Aktuator dienender elektrischer Motor sowie ein mehrstufiges Planetengetriebe sind in Bezug auf die gemeinsame Rotationsachse koaxial angeordnet. Bei der Herstellung der Aktuatoreinrichtung ist es erforderlich, die einzelnen Komponenten des Planetengetriebes an einem axialen Ende des Gehäuses in das Gehäuse einzuführen und nach dem Einbau axial zu sichern. Ein abtriebsseitiger Planetenradträger, der im Zusammenbauzustand zu einem Wankstabilisator drehfest mit einem Stabilisatorabschnitt verbunden ist, muss gegenüber dem Gehäuse der Aktuatoreinrichtung mittels eines Wälzlagers drehbar gelagert werden. Aus dem Stand der Technik ist es bekannt, dieses Wälzlager gegenüber dem Gehäuse mittels eines Sicherungsrings in Form eines Seegerrings axial zu sichern. Die Montage dieses Seegerrings erfordert hohe Kräfte und Geschicklichkeit, eine Einstellbarkeit der axialen Sicherungskraft ist kaum möglich.

Daneben sei auf DE 10 2016 200 177 A1 verwiesen. Diese betrifft ein Verfahren zur Herstellung eines Wankstabilisators, insbesondere eine Maßnahme zur sicheren Positionierung eines mit einem Gehäusegrundkörper des Wankstabilisators zu verschweißenden Flansches. Offenbart werden der hülsenförmige Gehäusegrundkörper und der stirnseitig daran angeschweißte Flansch. Gemäß dortigem [0015] ist der Flansch als Ring gestaltet, der sich von der zylindrischen Wandung des Gehäusegrundkörpers aus nach innen erstreckt und eine gestufte Anschlusskontur aufweist, die der stirnseitigen Kontur des Gehäusegrundkörpers angepasst ist. Der Flansch hat mutmaßlich die Funktion, eine im Gehäuse befindliche Aktorik axial zu sichern. Das Gehäuse weist an einem der Stirnseite benachbarten Bereich der Außenoberfläche eine ringförmig umlaufende Strukturierung auf. Diese Strukturierung ist als Rändelung oder Beschriftung ausgebildet und dient zur optischen Orientierung während der Befestigung des Flansches. Dazu erfasst ein optischer Sensor zunächst die ringförmige Strukturierung, um dann - auf nicht näher beschriebene Weise - den Flansch am korrekten Ort (relativ zum Gehäusegrundkörper) platzieren zu können und mit dem Gehäuse zu verschweißen. Zusammenfassend besteht die Idee von DE 10 2016 200 177 A1 darin, am Gehäusegrundkörper eine optische Markierung vorzusehen, die eine ortsgenaue Befestigung eines axial sichernden Bauteils ermöglicht (sensorunterstütztes Positionieren eines anzuschweißenden Flansches).

Es ist eine Aufgabe der vorliegenden Erfindung, eine Aktuatoreinrichtung der eingangs genannten Art anzugeben, welche eine einfache und sichere Möglichkeit bietet, den innerhalb des Gehäuses angeordneten Aktuator und/oder damit zusammenwirkende Komponenten, wie insbesondere Komponenten des Getriebes, axial zu sichern.

Die Aufgabe wird gelöst durch eine Aktuatoreinrichtung gemäß dem Patentanspruch 1. Es handelt sich dabei um eine Aktuatoreinrichtung für einen verstellbaren Wankstabilisator eines Kraftfahrzeugs, mit einem sich in Richtung einer Rotationsachse erstreckenden Gehäuse und einem darin angeordneten Aktuator. Die Aktuatoreinrichtung ist betreibbar, zwei an gegenüberliegenden Enden der Aktuatoreinrichtung anbringbare Stabiliatorabschnitte um die Rotationsachse gegeneinander zu verdrehen. Erfindungsgemäß zeichnet sich die Aktuatoreinrichtung dadurch aus, dass an dem Gehäuse eine Eingriffskontur ausgebildet ist, die sich zum Gegenhalten beim Aufbringen eines um die Rotationsachse gerichteten Drehmoments auf das Gehäuse eignet, wobei am abtriebsseitigen Ende der Aktuatoreinrichtung ein Abtriebslager zur drehbaren Lagerung einer Getriebekomponente gegenüber dem Gehäuse angeordnet ist, das durch eine Lagerverschraubung axial gegenüber dem Gehäuse gesichert ist, wobei die Eingriffskontur an einem Gehäusedeckelabschnitt des Gehäuses ausgebildet ist, welcher an einem der abtriebsseitigen Lagerverschraubung gegenüberliegenden Ende der Aktuatoreinrichtung angeordnet ist. Mittels der Eingriffskontur lässt sich auf einfache Weise, insbesondere mittels eines geeigneten Werkzeugs, wie beispielsweise einem Schraubenschlüssel, das Gehäuse der Aktuatoreinrichtung drehfest halten. Vorteilhaft kann damit ein Gegenhaltemoment erzeugt werden, während an dem Gehäuse ein Montagevorgang durchgeführt wird, der auf das Gehäuse ein um die Rotationsachse gerichtetes Drehmoment - in dazu entgegengesetzter Richtung - aufbringt. Bei einem solchen Montagevorgang kann es sich beispielsweise um das Aufbringen einer Lagerverschraubung zur axialen Sicherung des abtriebsseitigen Wälzlagers gegenüber dem Gehäuse handeln. Die eingangs genannte Aufgabe wird damit auf konstruktiv einfache Weise gelöst.

Die erfindungsgemäß vorgesehene Eingriffskontur kann unterschiedlich gestaltet sein. Gemäß einer vorteilhaften Weiterbildung der Aktuatoreinrichtung ist das Gehäuse der Aktuatoreinrichtung im Wesentlichen rotationssymmetrisch ausgebildet. Eine derartige Bauform bietet sich insbesondere dann an, wenn in dem Gehäuse ein Aktuator und ein Getriebe koaxial in Bezug auf die gemeinsame Rotationsachse angeordnet sind. Eine verhältnismäßig einfach herstellbare Gehäuseform, die sich zugleich mit hoher Bauraumausnutzung zur Unterbringung eines Elektromotors und eines mehrstufigen Planetengetriebes eignet, liegt bei einer im Wesentlichen zylindrischen Bauform des Gehäuses vor.

Das Gehäuse kann einteilig ausgeführt sein. Alternativ kann das Gehäuse aus mehreren miteinander verschweißten Segmenten bestehen, insbesondere im Sinne von miteinander umfänglich verschweißten Rohrsegmenten.

Erfindungsgemäß ist vorgesehen, dass am abtriebsseitigen Ende der Aktuatoreinrichtung ein Abtriebslager zur drehbaren Lagerung einer Getriebekomponente gegenüber dem Gehäuse angeordnet ist, das durch eine Lagerverschraubung, insbesondere in Form eines Gewinderings axial gegenüber dem Gehäuse gesichert ist. Zweckmäßigerweise ist dazu am Gehäuse ein Innengewinde ausgebildet, in welches der Gewindering nach Montage des Abtriebslagers zur axialen Sicherung des Abtriebslagers eingeschraubt wird. Während des Montagevorgangs des Einschraubens des Gewinderings wird mit zunehmendem Einschraubungsgrad ein wachsendes Drehmoment auf das Gehäuse um die Rotationsachse aufgebracht, ohne ein Gegenhalten würde sich das Gehäuse daher mitdrehen. Zur Vermeidung einer Beschädigung des Gehäuses ist die erfindungsgemäße Eingriffskontur zum Gegenhalten während der Montage der abtriebsseitigen Lagerverschraubung nutzbar.

Erfindungsgemäß ist die Eingriffskontur an einem Gehäusedeckelabschnitt des Gehäuses ausgebildet, welcher an einem der abtriebsseitigen Lagerverschraubung gegenüberliegenden Ende der Aktuatoreinrichtung angeordnet ist.

Damit sich auf einfache Weise ein Gegenhalten durchführen lässt, ist die Eingriffskontur vorzugsweise als 2-Flach, Mehrflach, Sechsrund, Sechskant, Vielzahn oder dergleichen ausgeführt.

Vorteilhaft ist die Eingriffskontur durch spanende Bearbeitung des Gehäuses erzeugt. Ergänzend oder alternativ kann das Gehäuse zumindest abschnittsweise als Schmiedeteil mit daran ausgebildeter Eingriffskontur hergestellt sein. Die Eingriffskontur kann demnach auch komplett schmiedend, insbesondere ohne spanende Bearbeitung hergestellt sein.

Die Erfindung wird nachfolgend anhand eines Ausführungsbeispiels mit Verweis auf die Zeichnung erläutert. Daraus ergeben sich auch weitere Wirkungen und Vorteile der Erfindung. In der Zeichnung zeigt:
- Fig. 1: einen verstellbaren Wankstabilisator eines Kraftfahrzeugs in schematischer Ansicht,
- Fig. 2: eine Aktuatoreinrichtung gemäß dem einzigen Ausführungsbeispiel in Seitenansicht,
- Fig. 3: die Aktuatoreinrichtung gemäß dem einzigen Ausführungsbeispiel in Ansicht schräg von der Seite,
- Fig. 4: die Aktuatoreinrichtung des einzigen Ausführungsbeispiels in teilweiser Schnittdarstellung mit daran angebautem Stabilisatorabschnitt.

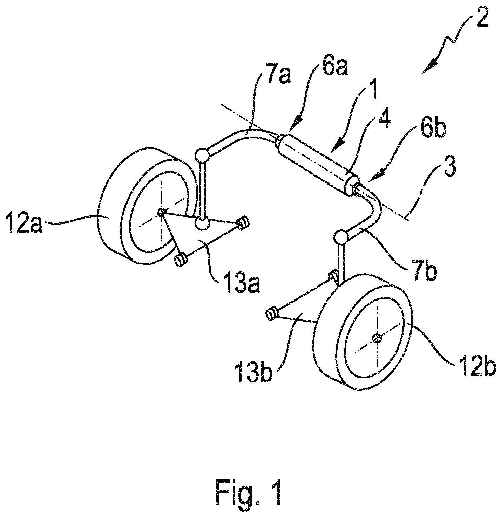

Zur Veranschaulichung des Einsatzgebietes der Erfindung zeigt Figur 1 zunächst einen verstellbaren Wankstabilisator 2 in schematischer Ansicht. Der verstellbare Wankstabilisator 2 ist Teil eines nicht vollständig gezeigten Fahrwerks eines (nicht dargestellten) Kraftfahrzeugs. Ein erstes Rad 12a und ein auf der gegenüberliegenden Fahrzeugseite angeordnetes zweites Rad 12b sind jeweils über einen Querlenker 13a bzw. 13b sowie weitere, aus Vereinfachungsgründen hier nicht dargestellte Fahrwerkkomponenten, mit dem Aufbau des Kraftfahrzeugs verbunden. Rad 12a und Querlenker 13a bzw. Rad 12b und Querlenker 13b bilden somit - vereinfacht - jeweils eine Radaufhängung. Jede dieser Radaufhängungen ist an ein Ende eines zugehörigen Stabilisatorabschnitts 7a bzw. 7b des verstellbaren Wankstabilisators 2 gekoppelt. Die beiden Stabilisatorabschnitte 7a und 7b sind fahrzeugmittig über eine Aktuatoreinrichtung 1 miteinander verbunden.

Auf für sich gesehen bekannte Weise ist der verstellbare Wankstabilisator 2 um eine Rotationsachse 3 drehbar gegenüber dem Fahrzeugaufbau gelagert (nicht näher gezeigt). Die Aktuatoreinrichtung 1, hier als zylindrischer Körper dargestellt, umfasst im Wesentlichen ein in Bezug auf die Rotationsachse 3 im Wesentlichen rotationssymmetrisches Gehäuse 4, in welchem ein Elektromotor sowie ein mehrstufiges Planetengetriebe angeordnet sind (in dieser Darstellung nicht eingezeichnet). Über den Elektromotor und das Getriebe stehen die Stabilisatorabschnitte 7a und 7b in Antriebsverbindung zueinander. Bei stehendem Elektromotor sind die beiden Stabilisatorabschnitte 7a, 7b über den Aktuator starr miteinander verbunden. Durch Betrieb des Elektromotors lassen sich die Stabilisatorabschnitte 7a, 7b abhängig von der Drehrichtung des Elektromotors um die Rotationsachse 3 gegeneinander verdrehen. So lässt sich der verstellbare Wankstabilisator 2 auf für sich gesehen bekannte Weise verstellen.

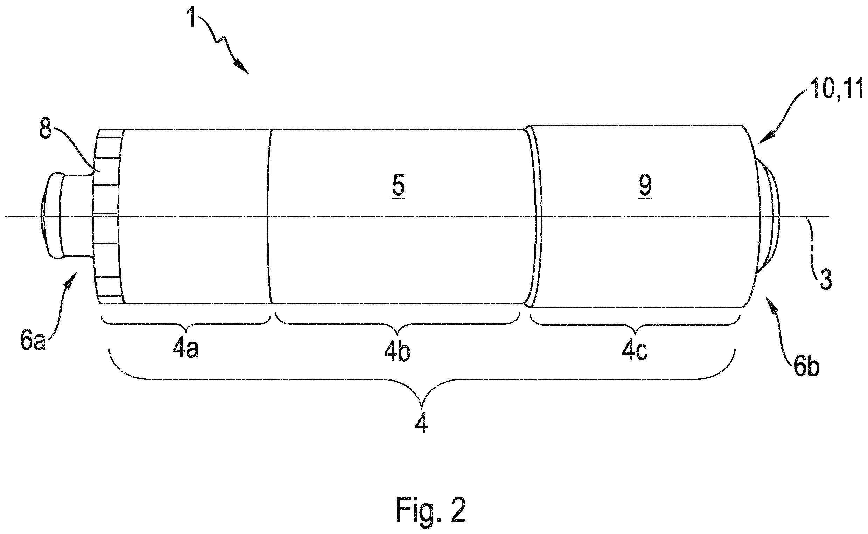

Die Figuren 2 bis 4 zeigen in verschiedenen Ansichten eine Aktuatoreinrichtung 1 gemäß dem einzigen Ausführungsbeispiel der Erfindung, wobei mit gleichen Bezugszeichen gleiche Teile bezeichnet sind. Die nachfolgende Beschreibung des Aufbaus und der Funktionsweise bezieht sich daher gleichermaßen auf sämtliche der Figuren 2 bis 4.

Figur 2 zeigt die Aktuatoreinrichtung 1 für einen wie schematisch in Figur 1 dargestellten Wankstabilisator 2 eines Kraftfahrzeugs. Die Aktuatoreinrichtung 1 weist eine im Wesentlichen zylindrische äußere Grundform auf, ein Gehäuse 4 erstreckt sich in Richtung der Rotationsachse 3. Das Gehäuse 4 ist demzufolge in Bezug auf die Rotationsachse 3 im Wesentlichen rotationssymmetrisch ausgebildet. Wie durch die geschweiften Klammern angedeutet, gliedert sich das Gehäuse 4 in drei Segmente 4a, 4b und 4c. Diese drei Segmente, ein Gehäusedeckelabschnitt 4a, ein Gehäusezwischenabschnitt 4b und ein Gehäuselagerabschnitt 4c sind jeweils in einem Umfangsbereich miteinander verschweißt zu einem das Gehäuse 4 bildenden Hohlkörper.

Auf für sich gesehen bekannte Weise sind in dem Gehäuse 4 der Aktuatoreinrichtung 1 ein Aktuator 5 in Form eines Elektromotors und ein mehrstufiges Planetengetriebe 9 angeordnet. Gemäß der Darstellung in Figur 2 sind die Positionen des Aktuators 5 und des mehrstufigen Planetengetriebes 9 angedeutet. Demnach befindet sich der Aktuator 5 nahe einem gehäusefesten Ende 6a der Aktuatoreinrichtung 1, während sich das mehrstufige Planetengetriebe 9 nahe einem abtriebsseitigen Ende 6b der Aktuatoreinrichtung 1 befindet. Im Einbauzustand (vergl. Figur 1) ist das gehäusefeste Ende 6a mit dem Stabilisatorabschnitt 7a verbunden, während das abtriebsseitige Ende 6b mit dem Stabilisatorabschnitt 7b verbunden ist.

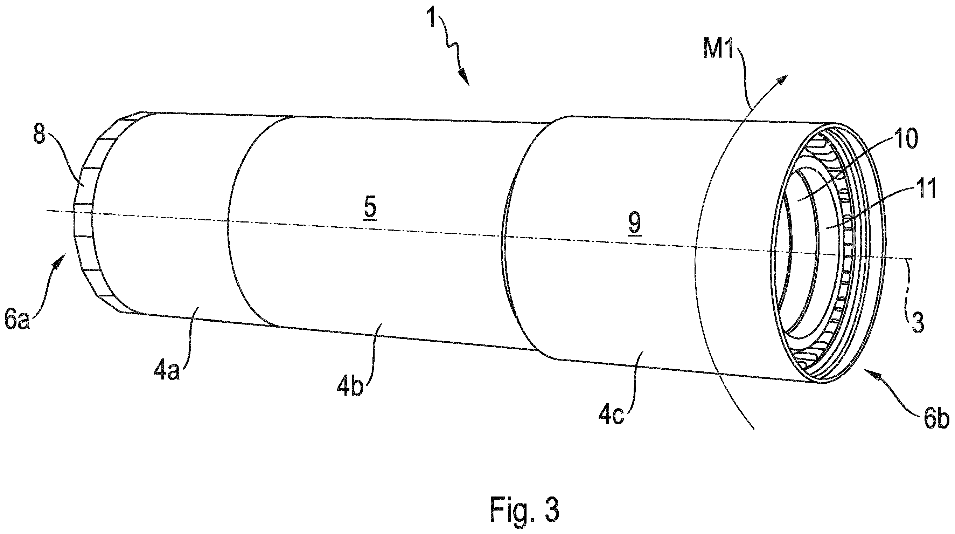

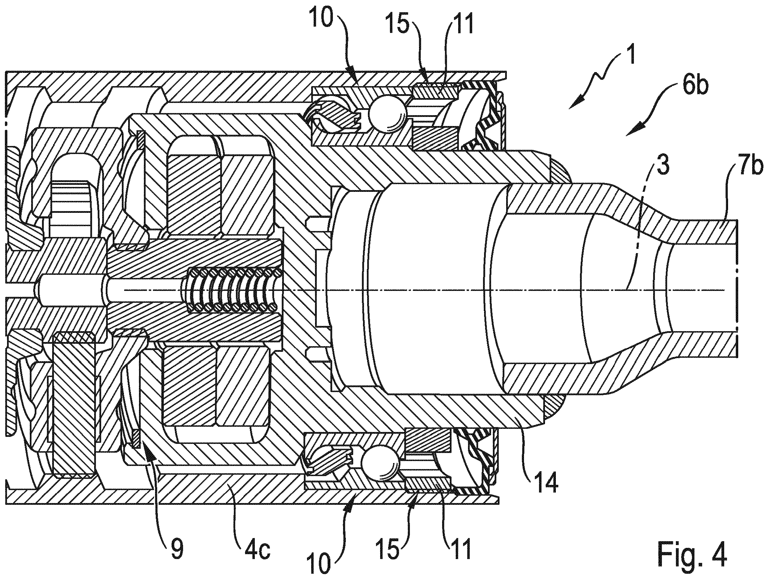

Wie Figur 4 zu entnehmen, welche einen Schnitt durch den Gehäuselagerabschnitt 4c der Aktuatoreinrichtung 1 zeigt, weist das mehrstufige Planetengetriebe 9 abtriebsseitig einen Planetenträger 14 auf, der im gezeigten Beispiel mit dem Stabilisatorabschnitt 7b verschweißt ist. Der Planetenträger 14 ist mittels eines als zweireihiges Wälzlager ausgeführten Antriebslagers 10 um die Rotationsachse 3 drehbar gegenüber dem Gehäuselagerabschnitt 4c (Teil des Gehäuses 4) gelagert. Zur Montage der Aktuatoreinrichtung 1 wird das Abtriebslager 10 in Axialrichtung (Rotationsachse 3) in den Gehäuselagerabschnitt 4c eingeschoben. Zur axialen Sicherung des Abtriebslagers 10 ist an dem Gehäuselagerabschnitt 4c ein Innengewinde 15 ausgebildet, in welches ein Gewindering 11 eingeschraubt ist. Zum Einschrauben des Gewinderings 11 ist ein verhältnismäßig hohes Drehmoment M1 (s. Figur 3) erforderlich, um die nötige Sicherungskraft sowie Selbsthemmung zu erzielen. Damit beim Einschrauben des Gewinderings 11 ein Mitdrehen des Gehäuses 4 unterbunden wird und zudem Beschädigungen am Gehäuse 4 durch unsachgemäßes Festhalten vermieden werden, weist das Gehäuse 4, wie in den Figuren 2 und 3 zu sehen, eine Eingriffskontur 8 auf. Die Eingriffskontur 8 ist umfänglich am Gehäusedeckelabschnitt 4a des Gehäuses 4 ausgebildet, welcher an einem der abtriebsseitigen Lagerverschraubung 11 gegenüberliegenden Ende 6a der Aktuatoreinrichtung 1 angeordnet ist. Wie in Figur 2 und 3 zu sehen, befindet sich die Eingriffskontur 8 an dem dem gehäusefesten Ende 6a zugewandten Ende des Gehäusedeckelabschnitts 4a, so dass sich ein Gegenhaltewerkzeug einfach in Axialrichtung aufsetzen lässt. Im gezeigten Ausführungsbeispiel ist die Eingriffskontur 8 als Mehrflach ausgeführt. Davon abweichend kann die Eingriffskontur alternativ als Zweiflach, Sechsrund, Sechskant, Vielzahn oder dergleichen ausgebildet sein.

Im gezeigten Ausführungsbeispiel ist die Eingriffskontur 8 durch spanende Bearbeitung des Gehäuses 4 im Bereich des Gehäusedeckelabschnitts 4a erzeugt. Alternativ oder ergänzend kann das Gehäuse 4 abschnittsweise als Schmiedeteil hergestellt sein, in welches die Eingriffskontur 8 eingebracht ist.

Mit Hilfe der erfindungsgemäß vorgesehenen Eingriffskontur lässt sich der Gewindering 11 auf einfache und sichere Weise gegenüber dem Gehäuselagerabschnitt 4c zur axialen Sicherung des Abtriebslagers 10 verschrauben. Dabei ermöglicht die Eingriffskontur 8 ein einfaches Gegenhalten, um einem beim Einschrauben des Gewinderings 11 auftretenden Drehmoment M1 entgegenzuwirken. Auf vorteilhafte Weise lassen sich damit hohe axiale Sicherungskräfte aufbringen, wobei durch die Verschraubung zudem eine Einstellbarkeit der Kräfte möglich ist. Beschädigungen des Gehäuses 4 der Aktuatoreinrichtung 1 lassen sich vermeiden, da die Eingriffskontur ein formschlüssiges Festhalten bzw. Gegenhalten ermöglicht. Eine beschädigungsträchtige Einspannung der Aktuatoreinrichtung 1 kann damit vermieden werden.

### Bezugszeichen

- 1: Aktuatoreinrichtung
- 2: Wankstabilisator
- 3: Rotationsachse
- 4: Gehäuse
- 4a: Gehäusedeckelabschnitt
- 4b: Gehäusezwischenabschnitt
- 4c: Gehäuselagerabschnitt
- 5: Aktuator
- 6a: gehäusefestes Ende der Aktuatoreinrichtung
- 6b: abtriebsseitiges Ende der Aktuatoreinrichtung
- 7a: Stabilisatorabschnitt (gehäusefest)
- 7b: Stabilisatorabschnitt (abtriebsseitig)
- 8: Eingriffskontur
- 9: mehrstufiges Planetengetriebe
- 10: Abtriebslager
- 11: Gewindering
- 12a: linkes Rad
- 12b: rechtes Rad
- 13a: Radaufhängung links
- 13b: Radaufhängung rechts
- 14: Planetenträger
- 15: Innengewinde
- M1: Drehmoment

## Patentansprüche

1. Aktuatoreinrichtung (1) für einen verstellbaren Wankstabilisator (2) eines Kraftfahrzeugs, mit einem sich in Richtung einer Rotationsachse (3) erstreckenden Gehäuse (4) und einem darin angeordneten Aktuator (5), wobei die Aktuatoreinrichtung (1) betreibbar ist, zwei an gegenüberliegenden Enden (6a, 6b) der Aktuatoreinrichtung (1) anbringbare Stabilisatorabschnitte (7a, 7b) um die Rotationsachse (3) gegeneinander zu verdrehen, **dadurch gekennzeichnet, dass** an dem Gehäuse (4) eine Eingriffskontur (8) ausgebildet ist, die sich zum Gegenhalten beim Aufbringen eines um die Rotationsachse (3) gerichteten Drehmoments (M1) auf das Gehäuse (4) eignet, wobei am abtriebsseitigen Ende (6b) der Aktuatoreinrichtung (1) ein Abtriebslager (10) zur drehbaren Lagerung einer Getriebekomponente (14) gegenüber dem Gehäuse (4) angeordnet ist, das durch eine Lagerverschraubung (11) axial gegenüber dem Gehäuse (4, 4c) gesichert ist, wobei die Eingriffskontur (8) an einem Gehäusedeckelabschnitt (4a) des Gehäuses (4) ausgebildet ist, welcher an einem der abtriebsseitigen Lagerverschraubung (11) gegenüberliegenden Ende (6a) der Aktuatoreinrichtung (1) angeordnet ist.

2. Aktuatoreinrichtung nach Anspruch 1, **dadurch gekennzeichnet, dass** in dem Gehäuse (4) ein Aktuator (5) und ein Getriebe (9) koaxial in Bezug auf die gemeinsame Rotationsachse (3) angeordnet sind.

3. Aktuatoreinrichtung nach Anspruch 1 oder 2, **dadurch gekennzeichnet, dass** das Gehäuse (4) im Wesentlichen rotationssymmetrisch ausgebildet ist.

4. Aktuatoreinrichtung nach einem der vorigen Ansprüche, **dadurch gekennzeichnet, dass** das Gehäuse (4) aus mehreren miteinander verschweißten Segmenten (4a, 4b, 4c) besteht.

5. Aktuatoreinrichtung nach einem der vorigen Ansprüche, **dadurch gekennzeichnet, dass** der Aktuator (5) als Elektromotor ausgeführt ist.

6. Aktuatoreinrichtung nach einem der vorigen Ansprüche, **dadurch gekennzeichnet, dass** das Getriebe (9) als vorzugsweise mehrstufiges Planetengetriebe ausgeführt ist.

7. Aktuatoreinrichtung nach einem der vorigen Ansprüche, **dadurch gekennzeichnet, dass** die Lagerverschraubung (11) in Form eines Gewinderings ausgeführt ist.

8. Aktuatoreinrichtung nach einem der vorigen Ansprüche, **dadurch gekennzeichnet, dass** die Eingriffskontur (8) zum Gegenhalten während der Montage einer abtriebsseitigen Lagerverschraubung (11) nutzbar ist.

9. Aktuatoreinrichtung nach einem der vorigen Ansprüche, **dadurch gekennzeichnet, dass** die Eingriffskontur (8) als 2-Flach, Mehrflach, Sechsrund, Sechskant, Vielzahn oder dergleichen ausgeführt ist.

10. Aktuatoreinrichtung nach einem der vorigen Ansprüche, **dadurch gekennzeichnet, dass** die Eingriffskontur (8) durch spanende Bearbeitung des Gehäuses (4) erzeugt ist.

11. Aktuatoreinrichtung nach einem der vorigen Ansprüche, **dadurch gekennzeichnet, dass** das Gehäuse (4) zumindest abschnittsweise als Schmiedeteil mit daran ausgebildeter Eingriffskontur (8) hergestellt ist.

## Claims

1. Actuator device (1) for an adjustable roll stabilizer (2) of a motor vehicle, having a housing (4) which extends in the direction of a rotation axis (3), and an actuator (5) which is disposed in said housing (4), wherein the actuator device (1) is able to be operated to rotate two stabilizer portions (7a, 7b) that are attachable to opposite ends (6a, 6b) of the actuator device (1) relative to one another about the rotation axis (3), **characterized in that** an engagement contour (8) is configured on the housing (4), which engagement contour (8) is suitable for the counter-holding action when applying a torque (M1) directed about the rotation axis (3) to the housing (4), wherein disposed on the output-proximal end (6b) of the actuator device (1) is an output bearing (10) for rotatably mounting a gearbox component (14) in relation to the housing (4), said output bearing (10) being secured axially in relation to the housing (4, 4c) by a bearing screw connection (11), wherein the engagement contour (8) is configured on a housing cover portion (4a) of the housing (4) which is disposed on an end (6a) of the actuator device (1) that lies opposite the output-proximal bearing screw connection (11).

2. Actuator device according to Claim 1, **characterized in that** an actuator (5) and a gearbox (9) are disposed in the housing (4) so as to be coaxial with the common rotation axis (3).

3. Actuator device according to Claim 1 or 2, **characterized in that** the housing (4) is configured so as to be substantially rotationally symmetrical.

4. Actuator device according to one of the preceding claims, **characterized in that** the housing (4) is composed of a plurality of segments (4a, 4b, 4c) welded to one another.

5. Actuator device according to one of the preceding claims, **characterized in that** the actuator (5) is embodied as an electric motor.

6. Actuator device according to one of the preceding claims, **characterized in that** the gearbox (9) is embodied as a preferably multi-stage planetary gearbox.

7. Actuator device according to one of the preceding claims, **characterized in that** the bearing screw connection (11) is embodied in the form of a threaded ring.

8. Actuator device according to one of the preceding claims, **characterized in that** the engagement contour (8) for the counter-holding action is able to be utilized while assembling an output-proximal bearing screw connection (11).

9. Actuator device according to one of the preceding claims, **characterized in that** the engagement contour (8) is embodied with 2 flat sides, multiple flat sides, a six-point star-shape, a hexagonal shape, multiple teeth, or the like.

10. Actuator device according to one of the preceding claims, **characterized in that** the engagement contour (8) is generated by subtractive machining of the housing (4).

11. Actuator device according to one of the preceding claims, **characterized in that** the housing (4) at least in portions is produced as forging having an engagement contour (8) configured thereon.

## Revendications

1. Dispositif d'actionnement (1) pour un stabilisateur de roulis réglable (2) d'un véhicule automobile, comprenant un boîtier (4) s'étendant dans la direction d'un axe de rotation (3) et un actionneur (5) disposé dans celui-ci, le dispositif d'actionnement (1) étant aptes à être actionné, deux sections de stabilisateur (7a, 7b) étant aptes à être montées sur des extrémités opposées (6a, 6b) du dispositif d'actionnement (1) pour tourner l'une par rapport à l'autre autour de l'axe de rotation (3), **caractérisé en ce qu'**un contour d'engagement (8) est formé sur le boîtier (4), qui convient pour le contre-appui lors de l'application d'un couple (M1) orienté autour de l'axe de rotation (3) sur le boîtier (4), un palier de sortie (10) étant disposé à l'extrémité côté sortie (6b) du dispositif d'actionnement (1) pour le montage rotatif d'un composant de transmission (14) par rapport au boîtier (4), qui est bloqué axialement par rapport au boîtier (4, 4c) par une pièce (11) de vissage de palier, le contour d'engagement (8) étant formé sur une partie de couvercle de boîtier (4a) du boîtier (4), qui est disposée à une extrémité (6a) du dispositif d'actionnement (1) opposée à la pièce (11) de vissage de palier côté sortie.

2. Dispositif d'actionnement selon la revendication 1, **caractérisé en ce qu'**un actionneur (5) et une transmission (9) sont disposés dans le boîtier (4) de manière coaxiale par rapport à l'axe de rotation commun (3) .

3. Dispositif d'actionnement selon la revendication 1 ou la revendication 2, **caractérisé en ce que** le boîtier (4) est réalisé sensiblement à symétrie de révolution.

4. Dispositif d'actionnement selon l'une des revendications précédentes, **caractérisé en ce que** le boîtier (4) est constitué de plusieurs segments (4a, 4b, 4c) soudés entre eux.

5. Dispositif d'actionnement selon l'une des revendications précédentes, **caractérisé en ce que** l'actionneur (5) est réalisé sous forme de moteur électrique.

6. Dispositif d'actionnement selon l'une des revendications précédentes, **caractérisé en ce que** la transmission (9) est réalisée sous la forme d'une transmission planétaire, de préférence à plusieurs étages.

7. Dispositif d'actionnement selon l'une des revendications précédentes, **caractérisé en ce que** la pièce (11) de vissage de palier est réalisée sous la forme d'une bague filetée.

8. Dispositif d'actionnement selon l'une des revendications précédentes, **caractérisé en ce que** le contour d'engagement (8) est apte à être utilisé pour le maintien pendant le montage d'une pièce (11) de vissage de palier du côté de la sortie.

9. Dispositif d'actionnement selon l'une des revendications précédentes, **caractérisé en ce que** le contour d'engagement (8) est réalisé sous la forme de 2 plats, de plusieurs plats, d'un hexagone à angles arrondis, d'un hexagone, de dents multiples ou similaire.

10. Dispositif d'actionnement selon l'une des revendications précédentes, **caractérisé en ce que** le contour d'engagement (8) est obtenu par usinage du boîtier (4).

11. Dispositif d'actionnement selon l'une des revendications précédentes, **caractérisé en ce que** le boîtier (4) est fabriqué au moins par sections sous forme d'une pièce forgée ayant un contour d'engagement (8) formé sur elle.
